**Europäisches Patentamt**

**European Patent Office**

**Office européen des brevets**

(19)

(11) Veröffentlichungsnummer : **0 012 329 B1**

# (12) EUROPÄISCHE PATENTSCHRIFT

(45) Veröffentlichungstag der Patentschrift :
**22.09.82**

(21) Anmeldenummer : **79104902.6**

(22) Anmeldetag : **04.12.79**

(51) Int. Cl.³ : **F 02 B 37/00**, F 01 C 1/07, F 01 C 1/077

(54) **Rotations-Schwinglader für Verbrennungskraftmaschinen.**

(30) Priorität : **04.12.78 DE 2852443**
**21.03.79 DE 2910990**
**24.08.79 DE 2934287**

(43) Veröffentlichungstag der Anmeldung :
**25.06.80 (Patentblatt 80/13)**

(45) Bekanntmachung des Hinweises auf die Patenterteilung : **22.09.82 Patentblatt 82/38**

(84) Benannte Vertragsstaaten :
**CH FR GB IT**

(56) Entgegenhaltungen :
**DE A 1 526 442**
**DE A 2 421 532**
**DE A 2 437 714**
**DE A 2 458 971**
**DE A 2 735 953**
**DE A 2 844 525**
**DE C 36 252**
**DE C 251 698**
**DE C 837 940**
**FR A 2 359 973**
**LUEGER « Lexikon der Technik » Band 7 1965,**
**DEUTSCHE VERLAGSANSTALT, Stuttgart,**
**Seiten 597 bis 599**

(73) Patentinhaber : **Kickbusch, Ernst, Dipl.-Ing.**
**Eschenhofstrasse 46**
**D-8900 Augsburg (DE)**

(72) Erfinder : **Kickbusch, Ernst, Dipl.-Ing.**
**Eschenhofstrasse 46**
**D-8900 Augsburg (DE)**

Rotations-Schwinglader für Verbrennungskraftmaschinen

Gegenstand der Erfindung, der Rotations-Schwinglader für Verbrennungskraftmaschinen, ist eine rotierende Verdrängermaschine mit den Hauptteilen Gehäuse und Doppelrotor, bei der gleichsinnig umlaufende Radzellen des Doppelrotors durch etwa radial und in Achsrichtung verlaufende Wände, einem den Doppelrotor umschließenden Ringkörper, mitrotierenden Seitenwänden und einer inneren konzentrischen Begrenzung gebildet werden, woben die radialen Längswände der Radzellen abwechselnd mit einer von 2 konzentrischen Wellen verbunden sind, die ihrerseits durch kinematische Mittel so miteinander gekoppelt sind, daß eine periodische Bewegung der radialen Zellenwände gegeneinander bei gleichsinnigem Umlauf der Glieder des Doppelrotors erzwungen wird, sodaß die Zellenwolumina sich während eines Umlaufs des Doppelrotors nach einer vorgegebenen Funktion ändern und so Arbeitsräume für energieabgebende Motorabgase und energiezehrende Ladeluftförderung schaffen, in der Gesamtfunktion also einen vorzugsweise freifahrenden Abgaslader für Verbrennungskraftmaschinen darstellend.

Diese Einrichtung übernimmt einen wesentlichen Teil der Ladungswechselarbeit der damit ausgerüsteten Verbrennungskraftmaschinen, nutzt die Energie der Abgase, sichert ein thermodynamisch optimales Luftverhältnis im gesamten Arbeitsfeld der Kraftmaschine, gestattet dabei das willkürliche Festlegen einer für den Verwendungszweck günstigen Drehmomentcharakteristik, paßt sich vollendet dem im breiten Arbeitsfeld einer Verbrennungskraftmaschine als Antrieb für Kraftfahrzeuge schwankenden Energieangebot der Abgase an, ermöglicht eine vollkommene Ausnutzung des Treibstoffs bei ökologisch günstiger Abgaszusammensetzung und ergibt bessere Verkehrsleistungen von Kraftfahrzeugen bei geringerer Baugröße. Ein damit versehener und darauf zugeschnittener Automobilmotor ist den bisher üblichen Otto- und Dieselmotoren in jeder Hinsicht weit überlegen und sollte als « Schwinglader-Motor » auch namentlich gekennzeichnet werden.

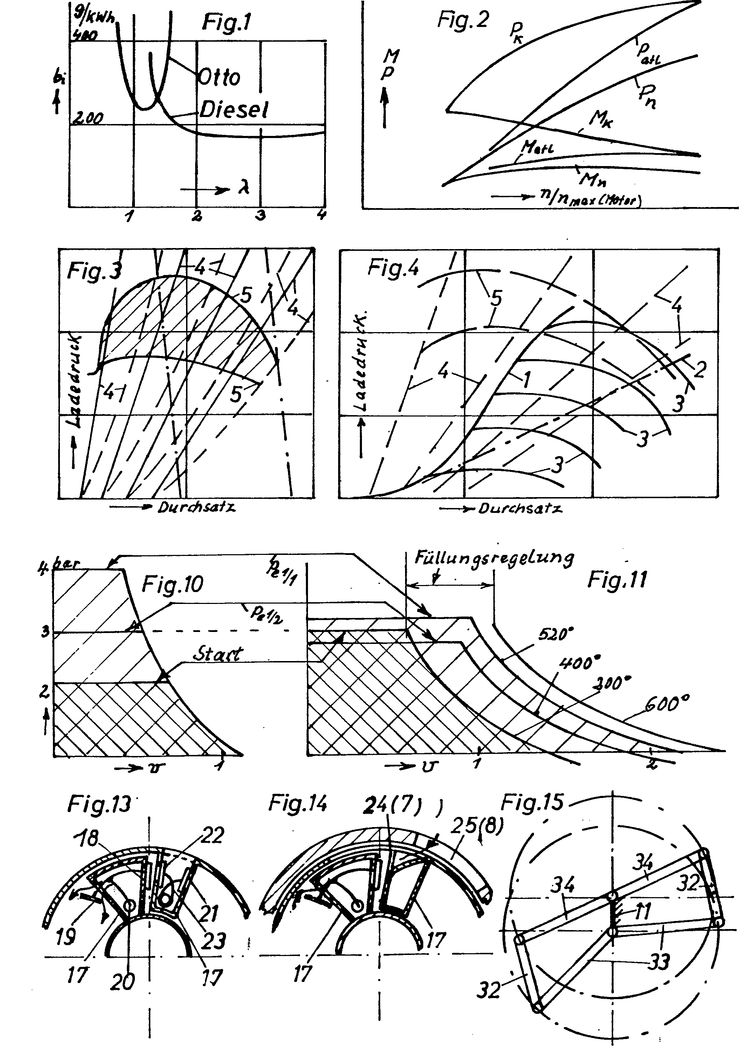

Vor der Diskussion des Standes der Technik und der erzielbaren Vorteile sei auf den grundsätzlichen Zusammenhang der Grundwerte nach Fig. 1 hingewiesen.

Der spezifische Brennstoffverbrauch einer Verbrennungskraftmaschine bezogen auf ihre innere Leistung, $b_i$, wird in hohem Maß vom Luftverhältnis 1 bestimmt.

Der grundsätzliche Nachteil des Ottomotors ist dadurch bedingt, daß bei ihm das Gemisch von vernebeltem Kraftstoff und Luft nur in engen Grenzen zündfähig ist und er bei zu hoher Kompression zum « Klopfen » neigt. Beim Dieselmotor dagegen umfaßt das thermodynamisch günstige Luftverhältnis einen weiten Bereich, der durch geeignete Aufladung auch genutzt werden kann.

Den effektiven spezifischen Brennstoffbedarf $b_e$ in g/kWh erhält man aus $b_i$ durch Division durch den mechanischen Wirkungsgrad $\eta_m$ :

$$\eta_m = P_e/P_e + P_r$$

$P_e$ = Effektivleistung
$P_r$ = Reibungsleistung
$P_r$ wächst mit der Baugröße und mit dem Quadrat der mittleren Kolbengeschwindigkeit.

Günstiges $\eta_m$ erhält man also bei kleinen Motoren, die durch Hochaufladung hohes $P_e$ haben und die langsam laufen.

Nach diesen Kriterien ist das Bestreben der gegenwärtigen Technik zu beurteilen, welche Optimales Arbeiten besonders der Kraftfahrzeugantriebe auf drei Wegen versucht :

Durch Abgasturboaufladung, wie sie z.B. in : K. Zinner — « Aufladung von Verbrennungsmotoren » — Springer-Verlag, Berlin 1975, Abschn. 6.2 u. 10. beschrieben wird.

Durch eine « Comprex » genannte Einrichtung, bei der die Ladeluft durch den Impuls der stoßweise aus dem Motor austretenden Abgase dynamisch komprimiert wird, gemäß dem vorgenannten Werk Abschn. 9.6.

Durch ein Aggregat mit rotierenden Verdrängermaschinen sowohl zur Ausnutzung der Abgase wie zur Kompression der Ladeluft, z.B. mit Kreiskolbenmaschinen der Bauart « Wankel », das durch die Deutsche OS-P 27 25 486.0 bekannt wurde.

Ausführungen, bei denen Kompressoren verschiedener Art direkt vom Motor angetrieben werden, kommen hier nicht in Betracht, da die bei Aufladung besonders hohe Abgasenergie der Motoren dabei nicht genutzt wird.

Wirtschaftlich relevant ist z.Zt. die Aufladung von Verbrennungskraftmaschinen durch Abgasturbolader und besonders günstig deren Einsatz bei großen Schiffsdieselmotoren, wo allerdings wegen der dort gefahrenen Propellerkurve besondere Verhältnisse vorliegen. Bei Ottomotoren dienen Abgasturbolader vorwiegend zum Ausgleich der Drosselverluste, verschlechtern aber die Charakteristik.

Der wesentliche technische Nachteil der Abgasturbolader liegt in dem durch physikalische Gesetze beschränkten Arbeitsfeld der verwendeten Turboverdichter. Diese haben ein Kennfeld nach Fig. 4 und die Pumpgrenze 1 verhindert den Betrieb bei kleinerem Durchsatz.

Die freifahrenden Lader folgen der Arbeitslinie 2, ergeben also hohe Aufladung zwangläufig bei großen Durchsatzmengen, also hohen Schluckmengen, d.h. bei hoher Drehzahl des Motors. Bei kleinen Motoren für Personenkraftwagen ist der Einsatz nur durch gewisse Manipulationen möglich ; unter anderem durch Abblasen von Gas und/oder Luft.

3 sind in Fig. 4 die Kennlinien eines Turboverdichters bei verschiedenen konstanten Drehzahlen, 4 die Schlucklinien des zum Lader passenden Motors, 5 wäre die ideale Ladelinie für einen Motor mit optimalen Zugkraftkurven für Straßenfahrzeuge. Man sieht, daß sie im Grundsatz orthogonal zur Arbeitslinie 2 des Abgasturboladers verläuft.

Arbeitslinie 2 bedeutet, daß die für den Fahrzeugbetrieb ausschlaggebende Drehmomentkennlinie z.B. eines Dieselmotors, verschlechtert wird, wie es die entsprechenden Kurven Fig. 2 zeigen.

Hier kennzeichnet Index n die Kennlinien des normalen Saugmotors, atl diejenigen des mit Abgasturboaufladung versehenen, während P die Leistung und M das Drehmoment bedeuten. Abszisse und Ordinate sind bezeichnet.

Für Fahrzeugbetrieb günstiger wären die Kurven mit Index k. Diese sind nur durch Lader mit Verdrängermaschinencharakteristik zu erzielen, wie dies z.B. in der oben erwähnten deutschen Offenlegungsschrift OS P 27 25 486.0 beschrieben ist. Ihnen entspricht Ladelinie 5, Fig. 4.

Nachteilig ist bei dem Verfahren nach OS P 27 25 486.0 die Verwendung von Kreiskolbenmaschinen für Abgas und Ladeluft. Die Ausführung dieser Maschinen nach dem Wankel-Prinzip bringt Abdichtungsprobleme. Gewicht und Preis sind zu hoch.

Das « Comprex »-Verfahren ist bei Lastkraftwagen versuchsweise erprobt. 15-jährige Entwicklung ohne massives Erscheinen am Markt deutet auf Schwierigkeiten hin. Nach dem erwähnten Buch von K. Zinner zeigt sich im Einsatz bei Personenkraftwagenmotoren eine gewisse Überlegenheit gegenüber Abgasturboaufladung. Es handelt sich aber nicht um einen freifahrenden Lader und daher ergeben sich zwangläufig Beschränkungen in der Mengen/Druck-Relation, die im breiten Arbeitsfeld eines Antriebes für Straßenfahrzeuge stark schwankt. Luftverhältnisse 1 > 1,5 sind schwer zu erreichen.

Abgasturboaufladung hat bei großen Schiffsdieselmotoren tatsächlich zu Verbrauchswerten wie Fig. 1 geführt. Diese Verhältnisse sind jedoch auf Kraftfahrzeugantriebe nicht übertragbar. Es wird hier nicht nur eine ganz andere Drehmomentcharakteristik verlangt, sondern das ums Vielfache zur ungünstigen Seite verschobene Verhältnis von Fördermenge zu Förderhöhe schließt die Verwendung von Turbomaschinen bei kleinen Motoren praktisch aus — denn der Wirkungsgrad des Laders bestimmt den des Motors.

Noch unangenehmer wirkt sich eine andere spezifische Eigenart der Turbomaschinen aus : Leistung, Durchsatz und Gefälle hängen in einer Weise zusammen, daß man den variablen Verhältnissen dieser Größen im weiten Arbeitsfeld eines Kraftfahrzeugmotors nur durch Anpassung des Turbinenleitapparates gerecht werden könnte. Das ist bei den kleinen Maschinen technisch gar nicht durchführbar.

Es ergab sich aus Fig. 4, daß die Motoren durch Abgasturbolader bei hohen Drehzahlen amstärksten aufgeladen werden, wo die Maschinen an sich schon strapaziert sind, und die notwendige Auslegung der Motoren mit dem Kompressionsverhältnis des Saugmotors führt bei der späteren Aufladung zu einer Erhöhung der Spitzendrücke. Diese wiederum ergeben außer der sinnlosen mechanischen Überbeanspruchung der Triebwerksteile wegen hoher Absolutdrücke im Motorzilinder erhöhte $NO_x$-Werte.

Die hohe Drehzahl der Abgasturbolader erfordert Spezialmaterial und bedingt Schwierigkeiten bei der Geräuschdämpfung.

Der Gesamtwirkungsgrad der kleinen Einheiten für Fahrzeugmotore ist gering und zur Ausnutzung der erhöhten Motorleistung bei verschlechterter Drehmomentcharakteristik ist ein teureres Getriebe erforderlich.

Im wichtigen Stadtverkehr wird die Abgasenergie nicht genutzt, und man fährt gerade dort mit umweltschädlichem Abgas.

Die Aufgabe der Erfingung besteht nach dieser Kritik darin, den teuren Kreiskolbenmaschinen mit ihren Abdichtungsproblemen einen anpassungsfähigen, billigen Rotations-Schwinglader gegenüberzustellen, und gegenüber Abgasturboaufladung oder Comprex volle Nutzung der Abgasenergie bei optimalem Luftverhältnis im gesamten Motorarbeitsbereich, niedrige Drehzahl, hohen Wirkungsgrad, niedrigere Motorbeanspruchung, günstige Fahrleistungscharakteristik, Verwendung billigen Materials und geräuscharmen Betrieb bei Einfachheit, Wartungsfreiheit und geringem Gewicht zu gewährleisten.

Die Lösung der Aufgabe wird in einem besonderen Rotations-Schwinglader gefunden, einer rotierenden Verdrängermaschine, die als solche keiner Beschränkung des Arbeitsfeldes unterliegt und für die vorliegenden Verhältnisse von Förderhöhe zu Fördermenge physikalisch geeignet ist, bei der durch niedrige Drehzahl und direkte Arbeitsübertragung der Abgasenergie zum Ansaugen und zur Kompression der Ladeluft ein hoher Gesamtwirkungsgrad verbürgt wird, sodaß geringste Ansprüche an die Werkstattarbeit bei großen Toleranzen gestellt werden.

Arbeitsorgane dieser Maschine sind einzelne Radzellen, weloche durch Verindung der sie seitlich im Umlaufrichtung begrenzenden, vorwiegend radial und in Achsrichtung verlaufenden Wände abwechselnd mit einer von zwei konzentrischen Wellen gekennzeichnet sind. Diese Wellen sind durch kinematische Mittel, elliptische oder unrunde Zahnräder oder Kurbelgetriebe in ihrer allgemeinsten Form als 4-Gelenk-Ketten, miteinander treibend verbunden, was bewirkt, daß die Volumina der Radzellen sich während der gleichsinnigen Rotation = Nachbarzellen im Gegentakt = rythmisch schwingend vergrößern und anschließend verkleinern und so Arbeitsräume für Expansion, Ansaugen und Kompression bilden. Wesentlich sind dabei Einrichtungen für den Ladungswechsel, welche die Arbeitsräume der Radzellen in 2 Gruppen, eine Gruppe mit größeren, die andere mit kleinerem maximalem Summenvolumen so versorgen, daß der Gruppe mit dem größeren Summenvolumen Motorabgase so zugeführt werden, daß sie dort expandierend Arbeit leisten, die auf den Doppelrotor übertragen wird, während der anderen Gruppe Ladeluft für den Motor so zugeführt wird, daß diese in die Zellen gesaugt und dann komprimiert wird, wobei die von den Abgasen geleistete Arbeit genutzt wird und die Druckluft alsdann dem Motor zur Verfügung steht.

Spiralstutzen am Gehäuse vermitteln dabei Zu- und Ableitung.

Durch die gewählte — und durch geeignete kinematische Mittel realisierte — Funktion für die periodische Änderung der Zellenvolumina wird der Durchsatz bestimmt, der das 2 bis 6-fache des freien Volumens des Doppelrotors je Rotorumdrehung beträgt. Diese enorme Kapazität kann für niedrige Dreh-Zahl oder kleine Baumaße eingesetzt werden.

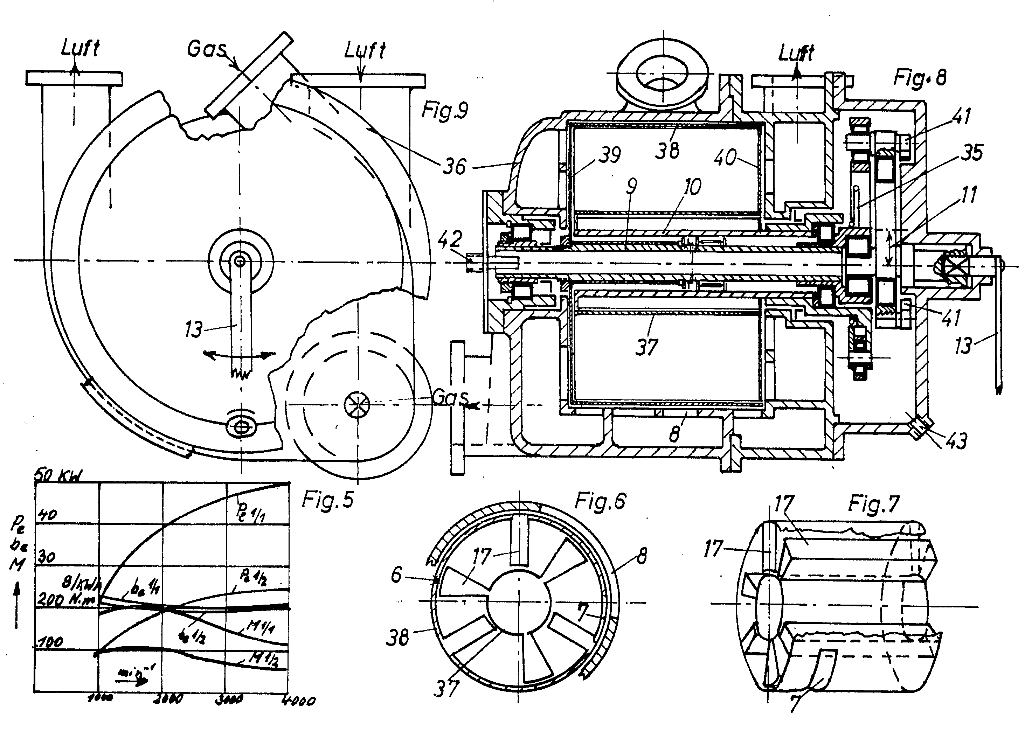

Der mechanische Wirkungsgrad des Rotations-Schwingladers ist sehr hoch, sodaß der Gesamtwirkungsgrad vorwiegend vom volumetrischen Wirkungsgrad bestimmt wird. Die für diesen wichtigen schädlichen Räume können sehr klein gehalten werden, und der Lässigkeit, dem Überströmen von Gas und Luft von Zelle zu Zelle, begegnet man durch besonders breite Dichtflächen, etwa entsprechend 6 — Fig. 6. Diese Maßnahme erlaubt große Spiele und anspruchslose Werkstattausführung.

Als besonders günstig für die Aufladung von Verbrennungskraftmaschinen durch den Rotations-Schwinglader ist die Möglichkeit herauszustellen, den sonst im Betrieb freifahrenden Rotor problemlos, z.B. über Keilriementrieb und Freilaufkupplung, mit der Motorwelle treiben zu verbinden, sodaß Aufladung bereits vom Start an erfolgt und auch im Leerlauf gewährleistet ist.

Bei 4-Takt-Motoren kann man auf diese Verbindung, welche die freizügige bauliche Disposition behindert, verzichten und das sofortige Anfahren des Laders beim Start des Motors durch den ausgeschobenen Zylinderinhalt bewirken. Dazu ist es nur nötig, dafür zu sorgen, daß der Doppelrotor sich beim Starten des Motors immer in Anfahrlage auch bezüglich der Einlaßschlitze für die Motorabgase befindet und eine Ingangsetzung in verkehrter Drehrichtung verhindert wird. Dazu dienen die in Zusammenhang mit Fig. 8 diskutierten Einrichtungen.

Dadurch ist es möglich, das Kompressionsverhältnis der mit diesem Lader ausgerüsteten Verbrennungskraftmaschinen den Aufladebedingungen optimal anzupassen. Auf diese Weise werden die im Motorzylinder auftretenden Spitzendrücke gegenüber den Verhältnissen bei Abgasturboaufladung reduziert.

Der freifahrende Rotations-Schwinglader paßt sich sonst wie ein Abgasturbolader automatisch den durch Drehzahl und Brennstoffzuteilung charakterisierten Bedingungen des Motors an, nur daß diese Anpassung momentan erfolgt und sein höherer Gesamtwirkungsgrad günstigere Bedingungen schafft, während das Fehlen einer Pumpgrenze den uneingeschränkten Einsatz im Gesamtarbeitsbereich ermöglicht.

Die Aufladung von Fahrzeugdieselmotoren ist unumstritten, aber es werden auch Personenkraftwagen mit durch Abgasturboladern aufgeladenen Ottomotoren angeboten und durch den Slogan propagiert, daß bei ihnen « 2 Zylinder durch Luft ersetzt werden. » Im Effekt werden dabei jedoch lediglich bei hohen Motordrehzahlen die Drosselverluste gedeckt. Die ausschlaggebende Drehmomentcharakteristik wird ungünstiger und die thermodynamische Verbesserung ist nicht essentiell.

Ein Rotations-Schwinglader würde auch die Verhältnisse bei Ottomotoren verbessern. Diese aber bleiben grundsätzlich benachteiligt, da bei Teillast günstige Bereiche ihrer p.v.-Diagramme abgeschnitten werden.

Beim Dieselverfahren bestehen derartige Einschränkungen nicht. Da vom Start an reichlich Luft zur Verfügung steht, kann man bei den mit Rotations-Schwingladern ausgerüsteten Automobiltriebwerken starke Brennstoffgaben je Zylinder-Arbeitshub schon bei niedriger Drehzahl des Motors einspritzen und so in diesem Arbeitsbereich hohe Drehmomente erzielen, ohne den Motor besonders zu strapazieren. Dieser günstige Drehmomentverlauf spart Getriebegänge und verleiht dem damit ausgerüsteten Fahrzeug rasanten Anzug und hohes Beschleunigungsvermögen.

Durch gute Spülung und optimales Luftverhältnis im ganzen Arbeitsbereich ergibt sich günstiger Brennstoffverbrauch und eine umweltfreundliche Abgaszusammensetzung.

Die Expansionsmaschine des Rotations-Schwingladers verarbeitet massenmäßig die geförderte Ladeluft plus verbranntem Brennstoff, aber das optimale Expansionsverhältnis muß wegen unterschiedlicher Drücke und Temperaturen der Abgase, die sich mit der Arbeitsbelastung des Motors ändern, den jeweiligen Daten angepaßt werden, d.h. es muß die Füllung geändert werden. Da man beim Eintritt der Motorabgase in die Expansionszellen des Doppelrotors wegen der Temperaturen grundsätzlich auf besondere Steuerorgane verzichten wird, also eine Schlitzsteuerung vorliegt, muß das Zeit-Volumen-Diagramm dieser Einlaßsteuerung beeinflußt werden. Der notwendige Umfang dieser Änderung ergibt sich aus den p.v-Diagrammen für die Motorabgase Fig. 11.

Der Einlaßschlitz für die Motorabgase im äußeren Mantel des Doppelrotors, 7 in Fig. 6, korrespondiert mit Schlitz 8 im räumlich feststehenden Gehäuse und wird baulich im Zusammenhang mit der periodischen Änderung der als Arbeitsräume dienenden Zellenvolumina festgelegt ; also für den Gaseinlaß nach der Totlage, in welcher die radialen Zellenwände dicht beieinander stehen und erstreckt sich so weit, wie für eine gewünschte Füllung erforderlich. Die Totlagen sind offensichtlich durch die kinematischen Mittel zur Kopplung der beiden konzentrischen Wellen 9, 10 — Fig. 8 bestimmt : bei elliptischen Zahnrädern durch deren Stellung im Raum zum Gehäuse und bei einer umlaufenden 4-Gelenk-Kette durch die zum Gehäuse fixierte Lage des Gestells 11 — Fig. 8. die Änderung der Lage der Zahnräder zum Gehäuse kann durch Schwenken der Schwinge 12 — Fig. 12 erfolgen und bei dem Kurbeltrieb Fig. 8 durch Schwenken des Gestells 11, hier als Exzenter ausgeführt, mittels Hebel 13.

Die Anspassung der Füllung an die jeweiligen Abgaszustände kann somit beim Rotations-Schwinglader verlustlos erfolgen, ohne daß Steuermittel im Bereich heißer Abgase einzusetzen sind. Eine Möglichkeit, welche bei den kritisierten Einrichtungen nicht besteht, aber beim Fahrzeugeinsatz einen entscheidenden Vorteil darstellt.

Natürlich beeinflußt diese Steuerungsmaßnahme auch die Funktionslage der Steuerschlitze für Lufteintritt, Luftaustritt und Gasaustritt.

Die Wirkung auf Lufteintritt und Gasaustritt ist zu vernachlässigen, da die Verschiebung für sie in dem Bereich wirksam wird, wo sich die Arbeitsräume für Einlaß und Auslaß nur schleichend ändern, und auf den Luftaustritt wirkt sich die Maßnahme entsprechend den in Fig. 10 dargestellten Verhältnissen positiv aus.

Für die Verstellung von Schwinge und Gestell kann man auf Einrichtungen nach dem Stand der Regeltechnik zurückgreifen. Als Einflußgrößen dienen Druck und Temperatur der Motorabgase sowie das sich im Motorzylinder einstellende Spülgefälle. Die jeweiligen Daten können mechanisch und/oder elektronisch ausgewertet werden, während zur mechanischen Verstellung als Servokraft Öldruck und elektrischer Strom zur Verfügung stehen.

Es ist zu beachten, daß beim Abstellen der Verbrennungskraftmaschine eine Rückführung des Rotations-Schwingladers in die Startstellung automatisch durch eine vom Servosystem unabhängige Kraft erfolgen muß.

Die Verteilung der Rotorzellen auf Abgas und Ladeluft erfolgt unter Berücksichtigung der Diagramme Fig. 10 u. 11. Ausschlaggebend sind dabei die Verhältnisse der Austrittsvolumina der Abgase zu den Eintrittsvolumina der Ladeluft. Im Mittel ist dieses Verhältnis 2 : 1.

Nach Festlegung dieser baulichen Bedingung erfolgt die weitere Anpassung des freifahrenden Rotations-Schwingladers automatisch wie bei der Abgasturboaufladung, die eingehend theoretisch und experimentell untersucht ist. Vergleiche dazu Abschn. 6.2.5 des oben erwähnten Buches von K. Zinner.

Die automatische Ladereinstellung ist danach abhängig vom Gesamtwirkungsgrad des Aggregats, von der Arbeitsenergie der Abgase und vom Spülgefälle.

Ist die Abgasenergie wegen hoher Temperatur sehr hoch, so läuft das Ladeaggregat schneller, es wird mehr Luft gefördert und das Abgas wird entsprechend dem größeren Luftverhältnis kühler. So stellt sich schnell für jeden Betriebspunkt ein Gleichgewicht ein.

Durch die Beaufschlagung der Zellen im Doppelrotor mit Luft und Abgas von etwa gleicher Masse wird der Rotations-Schwinglader selbst eine Mittlere Temperatur einnehmen.

Durch hohes Luftverhältnis im Arbeitsprozeß der zugehörigen Verbrennungskraftmaschine ist bei optimalem Kraftstoffverbrauch die Temperatur der Abgase jemals kaum höher als 460°, sodaß die mittlere Temperatur der Maschine 250° nicht überschreiten dürfte. Somit sind die Wärmeauswirkungen erträglich und es bedarf keines kostspieligen Spezialmaterials.

Anstatt benachbarte Arbeitszellen des Doppelrotors mit Gas und Luft zu beaufschlagen, wobei die Zellenzahl bestimmte Verhältnisse der Volumen bevorzugt, kann man auch eine Unterteilung des Doppelrotors in Achsrichtung vornehmen, wie in Fig. 12 ersichtlich. Hier gibt es den kürzeren Rotorteil 14 für Luft und einen längeren für das Abgasz (Gasabteilung 15). Dazwischen kann man auch eine Isolierkammer 16 anordnen.

Der Luftteil 14 ist ein reiner Kompressor und es liegt nahe, hier den Ladungswechsel mit Organen ähnlich den bekannten selbsttätigen Ventilen auszubilden, z.B. wie in Fig. 13. Die radialen Zellenwände sind hohl — 17 — und haben Einlaßöffnungen 18, die durch Klappenventile 19 auf einem gefederten Träger 20 bedient werden.

Der Druckluftauslaß ist analog zu gestalten : Austrittsöffnung 21, Klappen 22, Klappenträger 23.

Ein- bezw. Auslaß erfolgt hier jeweils auf einer Stirnseite der Zellenwände.

Es ist möglich, in ähnlicher Weise auch den Auslaß der treibenden Abgase zu gestalten — Fig. 14 : dagegen verzichtet man besser auf ein Ventil für den Gaseinlaß, da hier mit wesentlich höheren Temperaturen zu rechnen ist. Der Auslass weist zweckmässig Steuerschlitze 24 auf, die mit korrespondierenden 25 im Gehäuse zusammenarbeiten.

Vorzugsweise wird die unten beschriebene Bauart nach Fig. 8 vorgeschlagen, mit Doppelrotor nach Fig. 6 u. 7.

Die radialen Zellenwände 17 können sowohl aus Blechteilen gefertigt werden, wie auch aus massivem Material, evtl. aus Gußeisen. Massiv geben sie dem Rotor das erforderliche Schwunggewicht, sodaß auf Anordnung eines Schwungrades wie 27 Fig. 12 verzichtet werden kann.

Besondere Festigkeit erhält der Doppelrotor, wenn man die radialen Zellenwände 17 nicht wie in Fig. 7 genau in Achsrichtung verlaufen läßt, sondern sie nach Art der Profile einer mehrgängigen Schraube von entsprechender Gewindeform ausbildet.

Bei den kinematischen Mitteln, welche die periodische Änderung der Arbeitsräume erzwingen, ist die Funktion elliptischer Zahnräder einfach einzusehen. Sie werden wie in Fig. 12 als 28, 29 zusammen mit den Rückführenden Rädern 30 als Vorgelege angeordnet. Die Vorgelegewelle 31 ist dabei auf einer Schwinge 12 gelagert, deren Stellung gegenüber dem Gehäuse gleichzeitig die Lage der Totpunkte der Schwingbewegung der Arbeitszellen dazu bestimmt. Eine Verdopplung des Vorgeleges reduziert die Zahndrücke und die Beanspruchung der Lager der konzentrischen Wellen 9, 10.

Je nachdem, ob die elliptischen Räder um ihre Mittelpunkte oder die Brennpunkte kreisen, ergibt sich eine einfache oder eine doppelte Schwingungsfunktion über eine Umdrehung des Doppelrotors. Die einfache Funktion kann man auch durch ein äquivalentes System von Antiparallelkurbeln erzwingen.

Obwohl die Herstellung elliptischer Zahnräder nicht problematisch ist, sind sie schon wegen der Geräusche hier nicht zu favorisieren. In jeder Hinsicht überlegen ist vielmehr ein Kurbeltriebwerk im weiteren Sinn, das hier z.B. nach Fig. 15 als umlaufende doppelte 4-Gelenk-Kette vorgeschlagen wird. Das Gestell 11 liegt der Koppel 32 gegenüber und die beiden Kurbeln sind 33 u. 34. Die Systemkopplung wird durch das beiden Kurbelgetrieben gemeinsame Glied 34 bewirkt. Die Gliederlängen müssen der Grashof'schen Bedingung genügen und ihr Verhältnis zu einander bestimmt den Schwingungsausschlag der Funktion für die periodische Änderung der Arbeitsräume.

Das Gestell 11 ist in Fig. 8 als Exzenter ausgebildet, dessen Verdrehung durch den Hebel 13 die Totlagen der Arbeitsräume gegenüber dem Gehäuse folgen. Eine Reihe von Varianten ist nach den Lehren der Kinematik möglich. Hier ist die einfachste vorgestellt.

Dabei sind die Lager an den beiden Endpunkten des Gestells 11 konstruktiv gegeben, aber die an den Koppeln 32, welche keine volle Umdrehung ausführen, brauchen keineswegs Wälz- oder Gleitlager zu sein. Es ist vielmehr möglich, hier die Verbindung durch elastische Glieder herzustellen, aber auch durch Ketten oder andere Zugorgane. Wählt man hier elastische Koppelglieder, so können diese gleichzeitig die Funktion der Rückstellfeder 35 Fig. 8 übernehmen.

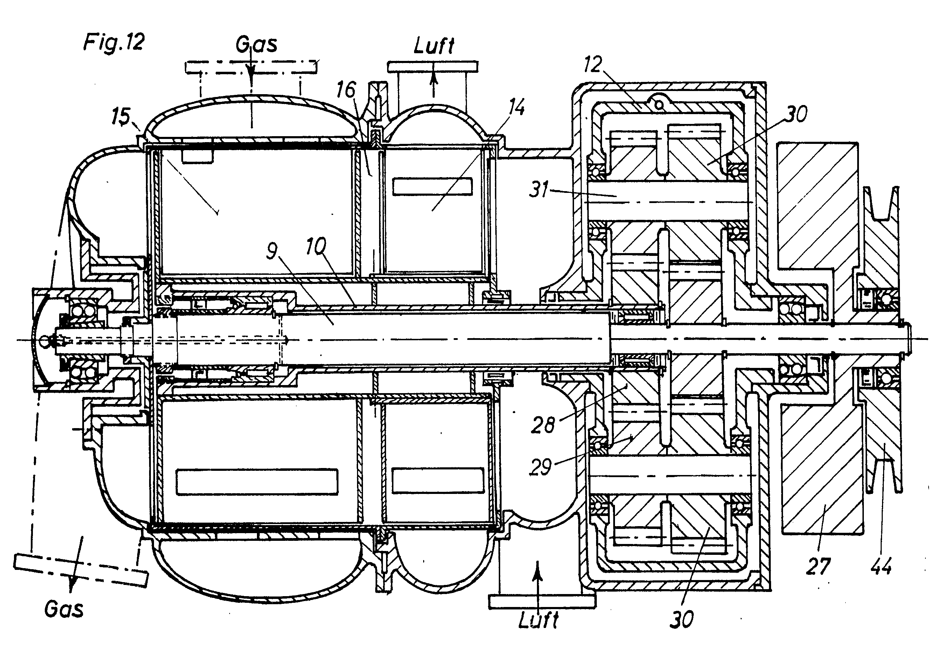

Die durch die Erfindung erzielbaren Vorteile können im thermodynamischen Bereich deutlich durch die Diagramme Fig. 3 u. 5 belegt werden.

Im gesamten Arbeitsbereich wird eine Verbrennungskraftmaschine für Fahrzeugantrieb unter voller Nutzung der Abgasenergie für 1/1 und 0/0 — d.h. für Vollast und im Leerlauf beliebig hoch aufgeladen. 4 sind wieder die Motorschlucklinien, zu denen hier auch die von der Ventilüberschneidung beeinflußten hinzugefügt sind. Strichpunktiert sind zwei Lieferkurven des Laders angedeutet, die beim freifahrenden Aggregat das Feld dicht abdecken.

Diese optimale Aufladung ist die Grundlage für die Motorcharakteristiken Fig. 5 mit den Kurven $P_e$ für Voll- und Halblast und den zugehörigen Funktionswerten für den spezifischen Brennstoffverbrauch $b_e$ und das Drehmoment M. Man erkennt die Verwandtschaft dieser Kurven mit denen Fig. 2, Index k. Durch diese Charakteristiken ist es möglich, mit einem hydrodynamischen Drehmomentwandler als Getriebe bei einem Personenkraftwagen auszukommen, also ein Getriebe ohne Zahnräder in schaltbaren Gangstufen zu benutzen, mit allen Vorteilen, wie sie nach OS P 27 25486.0 als bekannt anzusehen sind. Der Motor gibt dabei hohe Leistung bereits bei geringer Drehzahl ab, was ihn schont. Dies bedeutet auch leisen Lauf im Stadtverkehr und hohen Wirkungsgrad, da der Motor erfahrungsgemäß bei hoher Drehzahl hohe Eigenwiderstände entwickelt. Die mögliche Aufladung nach 5 Fig. 4 erlaubt einen Konstantleistungsmotor — das ideale Antriebsmittel für Straßenfahrzeuge.

Eine vorzugsweise Ausführung des Rotations-Schwingladers ist im Schnitt Fig. 8 mit der Ansicht in Achsrichtung Fig. 9, zusammen mit den Nebenfiguren 6, 7 u. 15 gut erkennbar. Das Gehäuse 36 trägt vier Stutzen für Abgas und Luft, angeflanscht ist der Getriebekasten mit dem mit Fig. 15 beschriebenen Kurbeltriebwerk. Das Gestell der umlaufenden 4-Gelenk-Kette ist als Exzenter 11 ausgebildet, welcher durch Hebel 12 gegenüber dem Gehäuse 36 verdreht werden kann.

In der axonometrischen Darstellung Fig. 7 erkennt man den Doppelrotor mit 3 radialen Wänden 17 auf einer inneren Hülse 37 und drei entsprechenden, welche zwischen die vorbeschriebenen greifen, auf dem Außenring 38. In Fig. 8 sind Außen- und Innenring mit den Seitenwänden 39, 40 abgeschlossen. Die beiden Teile des Doppelrotors sitzen auf den konzentrischen Wellen 9 u. 10, die durch das Kurbelgetriebe Fig. 15 gekoppelt sind. Eine Feder 35 dreht im Stillstand den Doppelrotor in Startstellung, die Klinken 41 verhindern Anlaufen in der verkehrten Drehrichtung.

Im Gehäuse 36 sind die Steuerschlitze 8 angedeutet, welche mit entsprechenden 7 im Außenrotor zusammenarbeiten. Auch in den Seitenwänden sind Steuerschlitze untergebracht.

Wegen geringer Betriebstemperatur kann von Kühlrippen oder Anschluß an das Kühlsystem der aufgeladenen Verbrennungskraftmaschine abgesehen werden. Lager und Getriebe dagegen können zwanglos an das Motorschmiersystem angeschlossen werden. Zufluß 42, Abfluß 43.

Bei dieser Ausführung kann sowohl auf eine Schwungscheibe wie auf den Zusatzantrieb vom Motor verzichtet werden, wie beides noch in Fig. 12 als 27 und 44 zu erkennen ist.

**Ansprüche**

1. Rotations-Schwinglader für Verbrennungskraftmaschinen, angebildet als rotierende Verdrängermaschine, bei der gleichsinnig umlaufende Radzellen eines Doppelrotors durch etwa radial und in Achsrichtung verlaufende Wände, einen den Doppelrotor umschließenden Ringkörper, mitrotierende Seitenwände und eine innere konzentrische Begrenzung gebildet werden, wobei die radialen Längswände (17) der Radzellen abwechselnd mit einer von zwei konzentrischen Wellen (9, 10) verbunden sind, die ihrerseits durch kinematische Mittel so miteinan-

der gekoppelt sind, daß eine periodische Bewegung der radialen Zellenwände gegeneinander bei gleichsinnigem Umlauf der Glieder des Doppelrotors erzwungen wird, sodaß die Zellenvolumina sich während eines Umlaufs des Doppelrotors nach einer vorgegebenen Funktion ändern und so Arbeitsräume für Betriebsmedien bilden, gekennzeichnet durch Einrichtungen zum Ladungswechsel welche die Radzellen in 2 Gruppen, eine Gruppe mit größerem, die andere mit kleinerem maximalem Summenvolumen, so versorgen können, daß der Gruppe mit dem größeren Summenvolumen Abgase eines Verbrennungsmotors so zugeführt werden, daß sie dort expandieren und Arbeit leisten können, welche auf den Doppelrotor übertragen wird, während der anderen Gruppe Ladeluft so zugeführt wird, daß diese in die Zellen gesaugt und dann komprimiert wird, wobei die von den Abgasen abgegebene Energie genutzt wird und die Druckluft dem Verbrennungsmotor zur Verfügung steht, so die Funktion eines vorzugeweise freifahrenden Abgasladers gewährleistend.

2. Rotations-Schwinglader nach Anspruch 1, bei dem die kinematischen Mittel, durch die die beiden konzentrischen Wellen (9, 10) miteinander gekoppelt sind, in einem Vorgelege mit mindestens 2 elliptischen Zahnrädern (28, 29) besteht, wobei die Vorgelegewelle auf einer Schwinge (12) gelagert ist.

3. Rotations-Schwinglader nach Anspruch 1, bei dem die kinematischen Mittel, durch welche die beiden konzentrischen Wellen (9, 10) miteinander gekoppelt sind, aus einem umlaufenden Kurbeltriebwerk bestehen, vorzugsweise aus einer doppelten 4-Gelenk-Kette (11, 32, 33, 34).

4. Rotations-Schwinglader nach Anspruch 1, bei dem die Steuerung des Ladungswechsels in den Arbeitsräumen durch Schlitze erfolgt, welche in der äußeren Wund des Doppelrotors (38) und in den Seitenwänden (39-40) angeordnet sind und mit entsprechenden Schlitzen (8) im Gehäuse (36) korrespondieren.

5. Rotations-Schwinglader nach Anspruch 1, bei dem der Doppelrotor in Achsrichtung in 2 Abteilungen unterteilt ist, eine für Ladeluft (14), eine für Ladeluft (14), eine für Motorabgase (15), wobei das Längenverhältnis entsprechend den durch die aufzuladende Verbrennungskraftmaschine bestimmten Verhältnissen der zu verarbeitenden Volumina von Motorabgas und Ladeluft bestimmt ist.

6. Rotations-Schwinglader nach Anspruch 5, bei dem der Ladungswechsel in der Luftabteilung (14) durch an sich bekannte selbstätige Ventile gesteuert wird.

7. Rotations-Schwinglader nach einem der Ansprüche 1-6, gekennzeichnet durch Mittel zur Füllungssteuerung (12, 13) damit die Füllung der Expansionszellen für optimale Energieausbeute gesteuert werden kann.

8. Rotations-Schwinglader nach Anspruch 7, bei dem die Steuerung des Abgaszutritts bei Schlitzsteuerung durch relative Verschiebung der Eintrittsschlitze (7) im Rotormantel (38) gegenüber den korrespondierenden Schlitzen (8) im Gehäuse, durch Verschiebung der Totpunkte der Volumenänderung der Arbeitszellen bewirkt wird, z.B. bei einem Vorgelege mit elliptischen Zahnrädern durch Verstellung der Schwinge (12) des Vorgeleges und bei Kurbeltrieb durch sinngemäße Verdrehung des Gestells (11) der 4-Gelenk-Kette.

9. Rotations-Schwinglader nach den Ansprüchen 1 bis 8, dadurch gekennseichnet, daß eine der Wellen (9, 10) über treibende Verbindung (44) mit Freilauf, so mit der Motorabtriebswelle gekoppelt ist, daß der Lader beim Start und im Leerlauf der Verbrennungskraftmaschine mitgenommen wird, Aufladung so vom Start an und im Leerlauf sichernd.

10. Rotations-Schwinglader nach den Ansprüchen 1 bis 8, vollständig freifahrend und nur mit den Leitungen für Abgas und Ladeluft mit einer 4-Takt-Verbrennungskraftmaschine verbunden, dadurch gekennzeichnet, daß bei Stillstand der aufzuladenden Verbrennungskraftmaschine der Lader automatisch in seine Anfahrstellung gedreht wird, sodaß beim Anlassen die Energie der ausgestoßenen Zylinderfüllung den Rotations-Schwinglader anwirft, wobei eine Arretierung, z.B. Klinke (41) sicherstellt, daß der Lader immer in der für ihn vorgesehenen Drehrichtung anläuft, wozu die Füllung gleichzeitig so geregelt wird, daß der ausgeschobene Zylinderinhalt der Verbrennungskraftmaschine die erforderliche Energie erhält.

**Claims**

1. A rotary piston device supercharging an internal combustion engine, in form of a positive displacement machine, incorporating cells of a double-rotor, rotating in the same sense, said cells formed by axial and radial partitions, a mantle, envelopping the double-rotor, rotating sides and a concentric inner tube, the radial partitions (17) of same cells connected alternately to one of two concentric shafts (9, 10), which are in their turn coupled by kinematic devices, which enforce a periodical movement of the radial partitions one against the other, whilst all components of the double-rotor rotate in the same sense, thus varying the cell volumes every turn of the double-rotor according to a predetermined mathematical function, forming operating compartments for air and gas, and with mechanism for charge changing to supply said operating compartments in two sections, one with a bigger, the other with a smaller maximum filling volume in such a way, that the section with the bigger filling volume is fed with exhaust gases of an internal combustion engine, where they expand and transfer their energy on the double-rotor, whereas charge air is conveyed to the other section, to be sucked in and compressed, thus exploiting exhaust energy and providing the engine with charge air, the complete arrangement forming a free-floating supercharger.

2. A rotary piston device supercharging an internal combustion engine as claimed in 1., wherein the kinematic device, coupling the concentric shafts (9, 10) is composed by a gearbox with at least two elliptic gears on a countershaft mounted on a rocker arm (12).

3. A rotary piston device supercharging an internal combustion engine as claimed in 1., wherein the kinematic device coupling the concentric shafts (9, 10), is constituted of a rotating crank drive, preferentially composed as a double 4-link-crank-chaine (11, 32, 33, 34).

4. A rotary piston device supercharging an internal combustion engine as claimed in 1., wherein control of charge change in the operating compartments is effected by slotted holes, provided in the mantle (38) of the double-rotor and in the sides (39, 40) corresponding to matching slots (8) in casing (36).

5. A rotary piston device supercharging an internal combustion engine as claimed in 1., wherein the double-rotor is divided orthogonal to axle in two sections, one for charge air (14) and the other for exhaust gas (15), the relation of their lengths proportional to the volumes of exhaust gas and charge air, on their part depending on the working range of the engine.

6. A rotary piston device supercharging an internal combustion engine as claimed in 5., wherein changing of charge-air in air section (14) is operated by standard automatic valves.

7. A rotary piston device supercharging an internal combustion engine as claimed in claims 1-6, wherein charge of operating compartments for exhaust gas is controlled according to the variable pressure and temperature of the same for optimum exploitation of exhaust energy.

8. A rotary piston device supercharging an internal combustion engine as claimed in 7., with control of exhaust in take by slotted holes, displacing intake slot (7) in mantle (38) versus corresponding slot in casing (8) by altering dead centres of volume-variation of the operating compartments, e.g. by adjusting the position of the rocker arm (12) of a layshaft type gearbox with elliptical gears or changing the position of the stationary item (11) of the rotating 4-link-crank-chaine.

9. A rotary piston device supercharging an internal combustion engine as claimed in claims 1-8, wherein one of the shafts (9, 10) is rigidly coupled to the engine crankshaft by means of a driving connection with free-wheel in such a manner, that the supercharger is driven by the starting engine and in idling, thus securing boost at start and in idling.

10. A rotary piston device supercharging an internal combustion engine as claimed in claims 1-8, free floating and only connected to a 4-cycle-engine by pipes for exhaust gas and charge air, wherein the internal combustion engine to be boosted being at a deadlock, the supercharger is automatically brought in its starting position, so that at start of the engine, the energy of the output of the filling of the engine cylinders starts the supercharger, whereby a stop, e.g. latch (41), secures starting of the supercharger in the correct direction of rotation, while exhaust charge is limited to provide the necessary energy of the output of cylinderfilling of the internal combustion engine.

**Revendications**

1. Machine volumétrique rotative pour l'alimentation d'un moteur à combustion interne, en quoi des cloisonnements cellulaires d'un double rotor sont formés par des parois principalement axiales et rayonnales, par un enveloppement torique du double rotor, des parois latérales prenant part au mouvement rotatif et une délimitation intérieure concentrique, en quoi les parois rayonnales (1, 2) des cloisonnements cellulaires sont accouplées alternant à l'un des deux arbres concentriques, qui, de leur part, sont accouplés l'un à l'autre au moyen d'un assemblage cinétique, forçant un mouvement périodique des parois rayonnales les unes envers les autres, les autres organes du double rotor tournant simultanément en même sens, variant ainsi les volumes des cloisonnements cellulaires pendant une révolution du double rotor selon une fonction voulue, formant ainsi des chambres de travail pour les fluides travaillants, caractérisée par des installations pour le changement de charge, alimentant les cloisonnements cellulaires en deux groupes, l'un avec un plus grand, l'autre avec un plus petit volume total maximum, de telle façon que le groupe avec le plus grand volume total est alimenté avec des gaz d'échappement d'un moteur à combustion interne, afin qu'ils s'y expandent et donnent leur énergie à l'exploit, en transférant cette énergie au double rotor, pendant que l'air de charge est conduit à l'autre groupe, de telle façon qu'il est aspiré par les cloisonnements cellulaires et y est comprimé ensuite, exploitant ainsi l'énergie des gaz d'échappement et alimentant le moteur à combustion interne avec l'air de suralimentation, en somme la réalisation d'un suralimenteur, de préférence à marche autonome.

2. Machine volumétrique pour l'alimentation d'un moteur à combustion interne suivant la revendication 1, caractérisé en ce que l'assemblage cinématique pour l'accouplage des deux arbres concentriques (9, 10) se compose d'un engrenage à roues dentées elliptiques (28, 29) de nombre minimum de deux, monté sur un arbre de transmission secondaire comme bras oscillant.

3. Machine volumétrique pour l'alimentation d'un moteur à combustion interne suivant la revendication 1, caractérisé en ce que l'assemblage cinématique pour l'accouplage des deux arbres concentriques (9, 10) se compose d'une chaîne bielle-manivelle circulante, en préférence d'une double chaîne cinématique à quatre joints (11, 32, 33, 34).

4. Machine volumétrique pour l'alimentation d'un moteur à combustion interne suivant la revendication 1, caractérisé en ce que le changement de charge aux chambres de travail est manœuvré par fentes, situées à l'enveloppement torique (38) et aux parois latérales (39, 40) correspondant avec des fentes semblables (8) au carter (36).

5. Machine volumétrique pour l'alimentation d'un moteur à combustion interne suivant la revendication 1, caractérisé en ce que le double rotor est divisé en deux sections, l'une derrière l'autre, l'une (14) pour l'air alimentaire, l'autre (15) pour les gaz d'échappement, dont la relation de longueur est déterminée par le rapport des volumes des gaz d'échappement et de l'air alimentaire, dépendant des caractéristiques différents du moteur suralimenté dans la plage de sa puissance.

6. Machine volumétrique pour l'alimentation d'un moteur à combustion interne suivant la revendication 5, caractérisé en ce que le changement de charge de la section à l'air (14) est fait par des soupapes automatiques bien connues.

7. Machine volumétrique pour l'alimentation d'un moteur à combustion interne suivant les revendications 1-6, caractérisé en ce que l'alimentation des cloisonnements cellulaires pour les gaz d'échappement est contrôlée conforme aux relations thermodynamiques variables pour mise en profit optimum de leur énergie.

8. Machine volumétrique pour l'alimentation d'un moteur à combustion interne suivant la revendication 7, où le changement de charge pour les gaz d'échappement est manœuvré par des fentes, caractérisé en ce que le contrôle de la quantité de l'alimentation est opéré par l'adjustage des fentes d'entrée (7) dans l'enveloppement torique (38) et ceux correspondant dans le carter (8), en décalant les points morts, dont dépend la variation des volumes des chambres de travail, p. ex. à l'usage d'un engrenage à roues dentées elliptiques par décalage du coulisse ou bras oscillant (12) de l'engrenage et à l'usage d'une chaîne bielle-manivelle circulaire, en contournant l'organe stationnaire (11).

9. Machine volumétrique pour l'alimentation d'un moteur à combustion interne suivant les revendications 1-8, caractérisé en ce qu'un des arbres (9, 10) est accouplé en entraînement (44) au vilebrequin du moteur à débrayage automatique par moyen d'une roue libre, assurant ainsi l'entraînement du surchargeur au démarrage et à la marche à vide du moteur.

10. Machine volumétrique pour l'alimentation d'un moteur à combustion interne suivant les revendications 1-9, fonctionnant autonome et attachée à un moteur à 4-temps seulement par des conduites pour les gaz d'échappement et l'air alimentaire, caractérisé en ce qu'à l'arrêt du moteur à combustion interne à suralimenter, le surchargeur prend automatiquement sa position de mise en marche, afin qu'au démarrage du moteur l'énergie de l'expulsion du contenu des cylindres démarre le surchargeur et un bloque, p. ex. cliquet (41) garantit le démarrage du surchargeur toujours en sens prévu, pendant que la charge des gaz est contrôlée de telle façon que le contenu des cylindres du moteur est expulsé avec l'énergie nécessaire.

0 012 329

Fig.1

Fig.2

Fig.3

Fig.4

Fig.10

Fig.11

Füllungsregelung

Fig.13

Fig.14

Fig.15

Fig.12

Gas

Luft

15

16

12

14

30

31

9    10

28

29

27    44

Gas

Luft

30

0 012 329

Fig. 5    Fig. 6    Fig. 7    Fig. 8    Fig. 9